# EUROPEAN PATENT SPECIFICATION

(11) **EP 2 385 018 B1**
(45) Date of publication and mention of the grant of the patent: **21.04.2021**
(21) Application number: 10733263.7
(22) Date of filing: 20.01.2010
(51) Int. Cl.: C01F 7/16, C22B 7/04, C04B 35/44, C04B 35/622, C04B 35/626, C04B 35/63, C04B 35/632, C04B 35/634, C04B 35/636, C04B 35/653

(54) **PROCEDURE FOR OBTAINING CALCIUM ALUMINATE FROM WASTE OBTAINED FOLLOWING TREATMENT OF SALINE DROSS FROM THE PRODUCTION OF SECONDARY ALUMINIUM**
VERFAHREN ZUR GEWINNUNG VON CALCIUM-ALUMINAT AUS DURCH DIE BEARBEITUNG VON SALZSCHLACKEN AUF DER PRODUKTION VON SEKUNDÄRALUMINIUM ENTSTANDENEM ABFALL
PROCÉDÉ POUR OBTENIR DE L'ALUMINATE CALCIQUE À PARTIR DU RÉSIDU OBTENU APRÈS TRAITEMENT DES SCORIES SALINES ISSUES DE LA PRODUCTION D'ALUMINIUM SECONDAIRE

(30) Priority: 20.01.2009 ES 200900149
(43) Date of publication of application: 09.11.2011
(73) Proprietor: Asturiana De Aleaciones, S.a., Asturias (ES)
(72) Inventor: MARTINEZ IGLESIAS, José, 33400 Avilés, Asturias (ES); SALINAS TUYA, Alejandro, 33400 Avilés, Asturias (ES); MARQUINEZ PEÑA, Fernando, 33400 Avilés, Asturias (ES)
(74) Representative: De Castro Hermida, José Luis
(86) International application number: PCT/ES2010/000016
(87) International publication number: WO 2010/084219

(56) References cited:
- EP-B1- 0 720 592
- WO-A1-99/00327
- DATABASE WPI Derwent Publications Ltd., London, GB; AN 2009-E89781, XP008157445 & CN 101 353 177 A (UNIV SHANGHAI JIAOTONG) 28 January 2009
- DATABASE WPI Derwent Publications Ltd., London, GB; AN 1978-27738A, XP008157443 & JP 53 022102 B (KOBE STEEL LTD) 01 March 1978
- DATABASE WPI Derwent Publications Ltd., London, GB; AN 1998-201524, XP008157441 & JP 10 053411 B (ARUTEKKU AMINO KK) 24 February 1998

## Description

### FIELD OF THE INVENTION

The procedure of the invention falls within the technical field of industrial waste recovery, particularly the use of the waste obtained from treatment of saline dross generated by the industry of secondary aluminium, which so far has little industrial application and is considered harmful from the environmental point of view.

It may also be considered as a procedure to produce calcium aluminate as an additive, for example, for the metallurgy of steel.

### BACKGROUND OF THE INVENTION

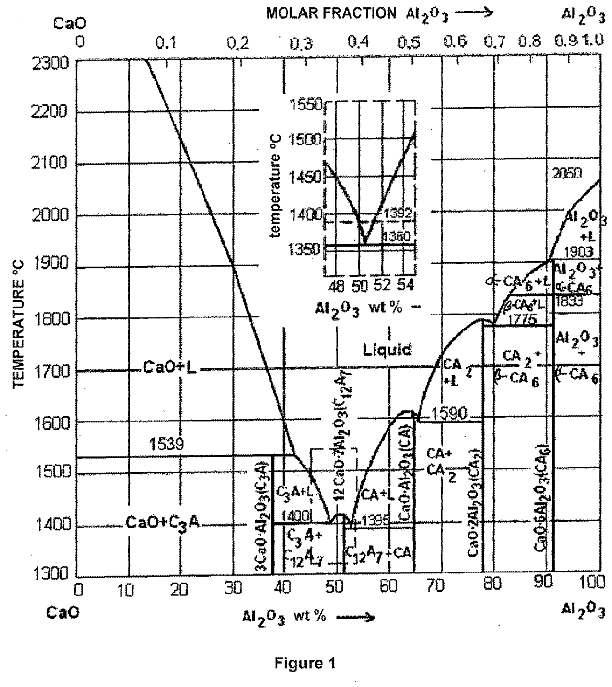

The calcium aluminates are described in the CaO-Al₂O₃ binary phases diagram. As shown in Figure 1 the hydraulic characteristics shown by some of its crystalline phases and their stability at high temperatures have made them suitable for use as refractory cement.

Another of its applications is within the metallurgical process of steel manufacturing, where the contribution of synthetic dross on calcium aluminate base favours the process of desulfurization of the steel and obtaining steel free of inclusions, especially Al₂O₃. Furthermore, the presence of a molten calcium aluminate dross on the steel facilitates the work in the secondary metallurgy, due to its suitable fluidity, and protects the steel against reoxidation processes and losses of temperature. In this sense, it is possible to find complete information in McGannon, "The Making, Shaping and Treating of Steel", or in patent documents such as US4490173, "Steelmaking additive composition".

Premolten calcium aluminates have proven to be the most suitable for use in metallurgical processes. This is due to increased melting rate compared, for example, with the use of mixtures of bauxite (high content in Al₂O₃) and CaO where the melting time increases by being preceded by a solid-solid reaction between components. The addition of mixtures of components (Al₂O₃ + CaO) in fine particle sizes would increase the reaction and hence melting rates, but an excessive generation of dust and performance losses caused by uptake of smoke, have limited this practice.

Most of the calcium aluminate consumed by the steel sector is synthesized from mixtures of bauxite and limestone. In this line firms like Kerneos offer a wide range of premolten calcium aluminates. On the other hand, there are products on the market where the contribution of a mixture of CaO and finely ground bauxite on a bath of molten steel leads to the formation of calcium aluminate in situ by the effect of the high temperature of the steel.

The use of dross from the melting of aluminium, and therefore with a high content of Al₂O₃, has been shown as an alternative to the use of bauxite for the production of calcium aluminates.

In this regard, patent US5385601, "Process for recovering aluminium dross to ladle flux for steel Processing" describes the production of calcium aluminates from aluminium dross, regardless of its composition, and flux with base of SiO₂ and/or CaO by melting at 1490° C. In ES2124425 "Procedimiento para la preparación de aluminatos calcicos a partir de residuos de escorias de aluminio" the formation of calcium aluminates starting from aluminium dross that have not been generated in the presence of salts is described. Similarly, US5716426 "Methods of processing aluminium dross and aluminium dross residue into calcium aluminate" proposes obtaining calcium aluminates in a single process of two consecutive steps, first the treatment of dross for the recovery of aluminium and second the treatment of the resulting dross with Ca(OH)₂, followed by calcination. WO 99/00327 "Process for preparing calcium aluminate from aluminum dross" discloses a procedure for obtaining calcium aluminate by blending a non-metallic product (NMP), produced in the metallurgy of secondary aluminium, with a source of calcium oxide, and forming into discrete bodies, such as pellets, with the help of a binder. The pellets are preferably dried before being heated at a temperature between 1093° and 1260°C to obtain the product.

As it has already been discussed, all the processes for the formation of existing calcium aluminates pass through processes at high temperatures, most above 1300° C. This makes said processes economically costly, due to high energy and production costs.

The present invention proposes a procedure for the formation of calcium aluminates using the waste from treatment, for the recovery of metallic Al and salts, of the saline dross produced in the metallurgy of the secondary aluminium. This procedure allows the formation of calcium aluminate precursors using cold forming. On the other hand, the present invention allows the use and recovery of waste generated after treatment of saline dross carried out by aluminium dross management companies.

### DESCRIPTION OF THE INVENTION

During the melting of secondary aluminium and/or aluminium dross, mixtures of sodium and potassium chlorides are used to cover the molten material, prevent oxidation, increase the yield and increase thermal efficiency of furnaces. This process generates large amounts of dross, known as "saline type dross." The treatment of saline dross carried out by restoring companies such as Remetal, Alsa, Engitec and the like, is the alternative to dumping. This treatment is aimed at the separation of metallic aluminium and salts, resulting in a waste with few industrial applications, plus, the generation of stocks with the consequent economic cost and waste devaluation.

For its treatment, the dross is subjected to a grinding and dilution process. In this process and because the aluminium does not dissolve, the same and a slurry composed of alumina and salts are recovered. The liquid phase of the sludge shall be composed of salts in solution, while the solid phase will be a mixture of alumina, silica and various metal oxides. After drying the solid phase a dry waste is obtained, which is the base feedstock for the development of the present invention.

Starting from this dry waste, in the process, a shaped product, briquette- or pellet-type, can be obtained. The dimensions of the final product will be adjusted to the needs of the industrial application to which it is directed.

The procedure comprises a first step of mixing of components, dry waste and calcium oxide and/or CaO precursor, in a ratio that should be calculated to obtain a final CaO/Al₂O₃ ratio between 0.2 and 1.80 in terms of its industrial application.

The second step is a grinding, homogenization and sieving to obtain particles of suitable size for the process. Although this step may be optional, since it is not necessary if the dry waste and the calcium oxide and/or CaO precursor are provided with the suitable particle size.

In the procedure with cold forming the next one is a fifth step, which consists of adding and mixing with a binder. In the sixth step the briquettes or pellets are formed by feeding a forming machine with the mixture of calcium aluminate precursors and binder. A seventh step of product drying and finally an eighth step of packaging in bags, big-bag or bulk.

As a result of this process a product with the shape of briquettes or pellets is obtained, with sufficient mechanical strength for its handling, which can be used, for example, in the metallurgy of steel, combining the properties of good melting rate for forming calcium aluminates and the absence of harmful dust in the environment.

The final product can be packaged in the most convenient way to be supplied to end-users.

To these steps others (water addition or intermediate drying, for example) can be added to improve the characteristics of the process, or other components that improve the product can be added, all without altering the essence of the invention.

The present invention makes available precursors of calcium aluminate obtained from dry waste obtained after treatment, for the recovery of metallic Al and salts, of the saline dross produced in the metallurgy of the secondary aluminium.

### BRIEF DESCRIPTION OF THE DRAWINGS

Drawings are provided to help better understand the invention and which are specifically related to the embodiment of said invention that is presented as an illustrative and not limitative example thereof.
Figure 1 is the CaO-Al₂O₃ binary phases diagram
Figure 2 is the X-ray diffraction (XRD) obtained from the final product.

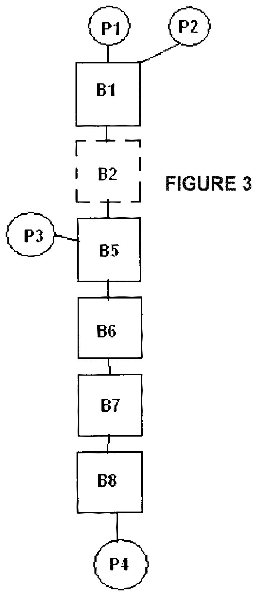

Figure 3 is the diagram of the process of the invention, with cold forming.

The references mean the following:
- Steps of the process:
   B1: Mixing of the dry waste with CaO and/or of CaO precursor With cold forming:
   B2: Grinding, homogenization and sieving (optional)
   B5: Mixing with binder
   B6: Formation of the briquette or pellet
   B7: Drying of the product (optional)
   B8: Packaging: Bags, Big-bag or bulk
- Products in the process:
   P1: dry waste (waste from the treatment of dross saline)
   P2: calcium oxide and/or CaO precursors
   P3: Binder
   P4: Briquettes or Pellets of calcium aluminate precursors.

### DESCRIPTION OF A PREFERRED EMBODIMENT OF THE INVENTION

A specific example of embodiment of the invention starts from the dry waste produced after treatment, for the recovery of metallic Al and salts, of the saline dross produced in the metallurgy of the secondary aluminium. This dry waste is produced, so far with few applications, by restoring companies such as Remetal, Alsa or Engitec. The dry waste (P1) has a composition that is approximately as follows:
Al₂O₃ → 50-80%
SiO₂ → 3-15%
MgO → 2-10%
CaO → 0.5-5%
TiO₂ → < 0.4%
MnO → < 0.4%

The first step of the procedure (B1) is the mixture of the dry waste (P1) and calcium oxide and/or CaO precursors (P2), at a rate that is calculated to obtain a final CaO/Al₂O₃ ratio between 0.2 and 1.80 according to the industrial application. In the example, calcium oxide is supplied with a particle size less than 2 mm, so the second optional step (B2) (grinding, homogenization and sieving) is not necessary.

In the case of seeking a cold formed product of calcium aluminate precursors, it continues with the fifth step (B5) in which the binder (P3) is added. In the case of wanting to form briquettes, calcium stearate, wax, molasses, resins, Ca(OH)₂, aluminous cements, solid tar, Polyetilenglicol (PEG), carboxymethylcellulose (CMC), silicates, alginates or Polyvinylpyrrolidine (PVP) have been tested, obtaining good results with any of them. Once the mixture has been homogenized it is proceeded to, in the sixth step (B6), feed the briquetting machine. This results in briquettes (P4), for example of about 40 mm (although the dimensions can be between 4 mm and 100 mm), ready to be packaged and delivered to the end user.

In the case of wanting to obtain the product (P4) in the form of pellets, it has been proven that is better to use wax, molasses, resins, Ca(OH)2, liquid tar, Polyetilenglicol (PEG), carboxymethylcellulose (CMC), silicates, alginates, Polyvinylpyrrolidine (PVP) or aluminous cements as a binder (P3). Once the mixture is homogenized water will be added if necessary and continue with the sixth step (B6), which in this case will be feeding a palletizing plate. Again, the size of the pellets will depend on the application and may vary between 1 and 50 mm in diameter.

If necessary, it is proceeded with the drying of the pellets or briquettes (B7). After that, it will continue with the packaging (B8) for supplying the product of calcium aluminate precursors (P4).

As a result of this process a product (P4) in the form of briquettes or pellets is obtained, with the following composition:
Al₂O₃ → 37%
CaO → 43%
SiO₂ → 4.3 %
MgO → 3.4 %

These briquettes or pellets can be used, for example, in the metallurgy of steel and as a desulfurizing, collector of inclusions, or for protecting steel against reoxidation processes and losses of temperature. Furthermore, the briquettes and/or pellets of calcium aluminate precursors of the invention have the properties of good melting rate for forming calcium aluminates and the absence of harmful dust in the environment.

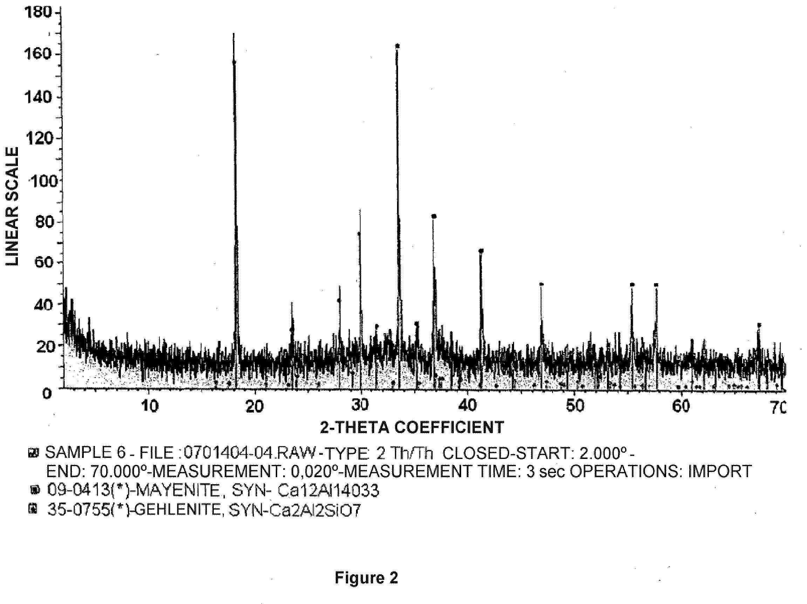

The product obtained by the procedure of the invention was subjected to trials that indicate that its properties are perfectly valid to be used, for example, in the metallurgy of steel. Thus, the product has a suitable melting rate and point (melting T < 1350° C), mainly forming the C12A7 (Ca₁₂Al₁₄O₃₃) crystalline phase of CaO-Al₂O₃ binary diagram. Figure 2 shows the X-ray diffraction obtained by one of the products (P4) obtained.

## Claims

1. Procedure for obtaining a calcium aluminate precursor from dry waste from the treatment of saline dross **characterized by** using as feedstock:
- the dry waste (P1) generated after said treatment, for the recovery of the metallic Al and salts, of the saline dross produced in the metallurgy of the secondary aluminium and
- calcium oxide and/or CaO precursor (P2);
that consists in:
at least one first step (B1) of mixing the dry waste (P1) and calcium oxide and/or CaO precursor (P2),
a fifth step (B5) in which a binder (P3) is added,
a sixth step (B6) in which briquettes or pellets of calcium aluminate precursors (P4) are formed by means of a forming machine,
a seventh step (B7) of drying of the product and
an eighth step (B8) of packaging;
and where the binder (P3) of the fifth step (B5) is selected among calcium stearate, wax, resins, Ca(OH)2, solid tar, Polyetilenglicol (PEG), carboxymethylcellulose (CMC), alginates, Polyvinylpyrrolidine (PVP) or aluminous cements and when the dry waste (P1) and calcium oxide and/or CaO precursor (P2) are cold formed with the binder (P3).

2. Procedure for obtaining calcium aluminate precursor from waste from the treatment of saline dross according to claim 1 **characterized in that** the first step (B1) comprises at least one second step (B2) comprising a grinding, homogenization and sieving to obtain a suitable particle size for the formation of the product.

3. Procedure for obtaining calcium aluminate precursor from waste from the treatment of saline dross according to any of claims 1 to 2 **characterized in that** on the first step (B1) the dry waste (P1) and calcium oxide and/or CaO precursor (P2) are mixed at a rate that is calculated to obtain a CaO/Al₂O₃ ratio in the final product (P4) between 0.2 and 1.80.

4. Procedure for obtaining calcium aluminate precursor from waste from the treatment of saline dross according to any of claims 1 to 3 **characterized in that** in the sixth step (B6) a briquetting-type cold forming machine is used.

5. Procedure for obtaining calcium aluminate precursor from waste from the treatment of saline dross according to any of claims 1 to 3 **characterized in that** in the sixth step (B6) a pelletizing plate is used.

6. Procedure for obtaining calcium aluminate precursor from waste from the treatment of saline dross according to any of claims 1 to 5 **characterized in that** it includes an eighth step (B8) of packaging in bags, big-bag or bulk.

7. Use of the calcium aluminate precursor made according to the procedure of any of the preceding claims, as briquettes or pellets, in the metallurgy of steel as a desulfurizer, as a collector of inclusions, or for protecting the steel against reoxidation.

## Patentansprüche

1. Verfahren zur Gewinnung eines Calciumaluminat-Vorläufers aus Abfällen aus der Behandlung von Salzschlacke, **gekennzeichnet durch** Verwendung als Ausgangsmaterial:
- die nach dieser Behandlung anfallenden trockenen Abfälle (P1) zur Rückgewinnung des metallischen AI und der Salze der in der Metallurgie des sekundären Aluminiums erzeugten Salzschlacke und
- Calciumoxid- und/oder CaO-Vorläufer (P2)
das besteht aus:
mindestens einen ersten Schritt (B1) des Mischens des trockenen Abfalls (P1) und des Calciumoxid- und/oder CaO-Vorläufers (P2);
ein fünfter Schritt (B5), in dem ein Bindemittel (P3) hinzugefügt wird,
einen sechsten Schritt (B6), in dem Briketts oder Pellets von Calciumaluminat-Vorläufern (P4) mittels einer Umformmaschine gebildet werden,
ein siebter Schritt (B7) des Trocknens des Produkts und
ein achter Schritt (B8) der Verpackung;
und wobei das Bindemittel (P3) der fünften Stufe (B5) ausgewählt ist aus Calciumstearat, Wachs, Harzen, Ca(OH)2, festem Teer, Polyetilenglicol (PEG), Carboxymethylcellulose (CMC), Alginaten, Polyvinylpyrrolidin (PVP) oder aluminiumhaltige Zemente
und wenn der trockene Abfall (P1) und der Calciumoxid- und/oder CaO-Vorläufer (P2) mit dem Bindemittel (P3) kalt gebildet werden.

2. Verfahren zur Gewinnung eines Calciumaluminat-Vorläufers aus Abfällen aus der Behandlung von Salzschlacke nach Anspruch 1, **dadurch gekennzeichnet, dass** der erste Schritt (B1) mindestens einen zweiten Schritt (B2) umfasst, der ein Mahlen, Homogenisieren und Sieben umfasst, um eine geeignete Partikelgröße für die Bildung des Produkts zu erhalten.

3. Verfahren zur Gewinnung eines Calciumaluminat-Vorläufers aus Abfällen aus der Behandlung von Salzschlacke nach einem der Ansprüche 1 bis 2, **dadurch gekennzeichnet, dass** im ersten Schritt (B1) werden der trockene Abfall (P1) und der Calciumoxid- und/oder CaO-Vorläufer (P2) gemischt, mit einer Geschwindigkeit, die berechnet wird, um ein CaO/Al₂O₃-Verhältnis im Endprodukt (P4) zwischen 0,2 und 1,80 zu erhalten.

4. Verfahren zur Gewinnung eines Calciumaluminat-Vorläufers aus Abfällen aus der Behandlung von Salzschlacke nach einem der Ansprüche 1 bis 3, **dadurch gekennzeichnet, dass** im sechsten Schritt (B6) eine Kaltumformmaschine vom Brikettiertyp verwendet wird.

5. Verfahren zur Gewinnung eines Calciumaluminat-Vorläufers aus Abfällen aus der Behandlung von Salzschlacke nach einem der Ansprüche 1 bis 3, **dadurch gekennzeichnet, dass** im sechsten Schritt (B6) eine Pelletierplatte verwendet wird.

6. Verfahren zur Gewinnung eines Calciumaluminat-Vorläufers aus Abfällen aus der Behandlung von Salzschlacke nach einem der Ansprüche 1 bis 5, **dadurch gekennzeichnet, dass** es einen achten Schritt (B8) der Verpackung in Säcken, Big-Bag oder Bulk umfasst.

7. Verwendung des Calciumaluminat-Vorläufers, der gemäß dem Verfahren eines der vorhergehenden Ansprüche hergestellt wurde, als Briketts oder Pellets, in der Metallurgie von Stahl als Entschwefelungsmittel, als Einschlusssammler oder zum Schutz des Stahls gegen Reoxidation.

## Revendications

1. Procédure d'obtention d'un précurseur d'aluminate de calcium à partir de déchets issus du traitement de crasses salines **caractérisé par** l'utilisation comme matière première :
- les déchets secs (P1) générés après ledit traitement, pour la récupération de l'Al métallique et des sels, des crasses salines produites dans la métallurgie de l'aluminium secondaire et
- oxyde de calcium et/ou précurseur de CaO (P2)
qui consiste en :
au moins une première étape (B1) de mélange des déchets secs (P1) et de l'oxyde de calcium et/ou du précurseur de CaO (P2),
une cinquième étape (B5) dans laquelle un liant (P3) est ajouté,
une sixième étape (B6) dans laquelle des briquettes ou pastilles de précurseurs d'aluminate de calcium (P4) sont formées au moyen d'une machine de formage,
une septième étape (B7) de séchage du produit et
une huitième étape (B8) de conditionnement ;
et où le liant (P3) de la cinquième étape (B5) est choisi parmi le stéarate de calcium, la cire, les résines, Ca(OH)2, le goudron solide, le polyétylèneglicol (PEG), la carboxyméthylcellulose (CMC), les alginates, la polyvinylpyrrolidine (PVP) ou des ciments alumineux
et lorsque les déchets secs (P1) et l'oxyde de calcium et/ou le précurseur de CaO (P2) sont formés à froid avec le liant (P3).

2. Procédé d'obtention d'un précurseur d'aluminate de calcium à partir de déchets issus du traitement des crasses salines selon la revendication 1, **caractérisé en ce que** la première étape (B1) comprend au moins une deuxième étape (B2) comprenant un broyage, une homogénéisation et un tamisage pour obtenir une taille de particule appropriée pour la formation du produit.

3. Procédé d'obtention d'un précurseur d'aluminate de calcium à partir de déchets issus du traitement de crasse saline selon l'une quelconque des revendications 1 à 2, **caractérisé en ce que** lors de la première étape (B1) les déchets secs (P1) et l'oxyde de calcium et/ou le précurseur de CaO (P2) sont mélangés à un taux calculé pour obtenir un rapport CaO/Al₂O₃ dans le produit final (P4) compris entre 0,2 et 1,80.

4. Procédé d'obtention d'un précurseur d'aluminate de calcium à partir de déchets issus du traitement de crasses salines selon l'une quelconque des revendications 1 à 3, **caractérisé en ce que** dans la sixième étape (B6) une machine de formage à froid de type briquetage est utilisée.

5. Procédé d'obtention d'un précurseur d'aluminate de calcium à partir de déchets issus du traitement des crasses salines selon l'une quelconque des revendications 1 à 3, **caractérisé en ce que** dans la sixième étape (B6) une plaque de granulation est utilisée.

6. Procédé d'obtention d'un précurseur d'aluminate de calcium à partir de déchets issus du traitement des crasses salines selon l'une quelconque des revendications 1 à 5, **caractérisé en ce qu'**il comprend une huitième étape (B8) de conditionnement en sacs, big-bag ou vrac.

7. Utilisation du précurseur d'aluminate de calcium fabriqué selon le mode opératoire de l'une quelconque des revendications précédentes, sous forme de briquettes ou de pastilles, dans la métallurgie de l'acier comme désulfurateur, comme collecteur d'inclusions, ou pour protéger l'acier contre la réoxydation.
